# FASCICULE DE BREVET EUROPEEN

(11) **EP 3 865 728 B1**
(45) Date de publication et mention de la délivrance du brevet: **29.07.2026**
(21) Numéro de dépôt: 21155161.9
(22) Date de dépôt: 04.02.2021
(51) Int. Cl.: F16F 1/38

(54) **ARTICULATION ANTIVIBATOIRE A LIMITATION AXIALE**
AXIAL BEGRENZTES ANTIVIBRATIONSGELENK
ANTI-VIBRATION JOINT WITH AXIAL LIMITATION

(30) Priorité: 14.02.2020 FR 2001502
(43) Date de publication de la demande: 18.08.2021
(73) Titulaire: HUTCHINSON, 75008 Paris (FR)
(72) Inventeur: MORNET, Yanis, 28220 CLOYES SUR LE LOIR (FR); OBERLE, Alexandre, 28200 CHATEAUDUN (FR)
(74) Mandataire: Plasseraud IP

(56) Documents cités:
- EP-A1- 0 381 560
- EP-A1- 2 270 356
- WO-A1-2010/136091
- US-A1- 2015 014 906

## Description

### Domaine technique

La présente description est relative aux articulations antivibratoires à limitation axiale.

### Technique antérieure

Le document FR2849907A1, selon son abrégé, présente une articulation antivibratoire hydraulique comportant des armatures intérieure et extérieure coaxiales reliées par un corps en élastomère qui délimite deux chambres hydrauliques communiquant entre elles par un passage étranglé. Une armature intermédiaire, noyée dans le corps en élastomère, comporte deux anneaux rigides autour desquels est serrée l'armature extérieure et qui présentent des collerettes débordant de cette armature. L'armature extérieure est bloquée entre les deux collerettes, ce qui permet la prise en charge d'efforts axiaux sans risque de démanchement de l'articulation.

Le document EP0381560A1, selon son abrégé, présente un dispositif ayant une faible rigidité vis-à-vis des efforts verticaux et radiaux de faible amplitude, grâce à une attache rotulante souple reliant l'armature extérieure et l'armature intérieure. Les efforts verticaux de grande amplitude sont limités par les butées interposées entre des rebords desdites armatures. Les efforts horizontaux sont repris par un revêtement latéral de l'armature extérieure, laquelle comporte sur les côtés des parties rentrées assurant une rigidité plus grande en latéral.

Le document WO2010136091A1, selon son abrégé, présente un palier de tête de jambe de suspension élastique pour véhicule automobile, comprenant un corps annulaire élastique, une bride de montage rigide présentant une première zone d'extrémité annulaire qui est fixée au corps annulaire et dans lequel le corps annulaire est encastré, et au moins une deuxième région d'extrémité de fixation sur un élément de carrosserie du véhicule automobile, et une ferrure intérieure rigide présentant un espace intérieur de réception axiale de la suspension tête de jambe de force et un extérieur, qui est fixé au corps annulaire et entouré radialement par la première région d'extrémité annulaire, dans lequel une section absorbante annulaire du corps annulaire est disposée entre la première région d'extrémité annulaire et la ferrure intérieure, la ferrure intérieure étant structurée de sorte qu'une dimension de l'extérieur de la ferrure intérieure peut être élargie et la section absorbante peut être soumise au moins radialement à une précharge de compression.

Le document EP2270356A1, selon son abrégé, présente une douille élastique qui comporte un support recevant un élément élastique. Un espacede profil uniforme existe entre la région de butée sphérique du support et la région de contre-butée de l'élément élastique dans la position neutre de la douille. Les régions de butée et de contre-butée sont orientées de manière identique et sont incurvées vers l'extérieur par rapport à un axe horizontal.

Le document US20150014906A1, selon son abrégé, présente un amortisseur de vibrations, qui permet d'augmenter une constante élastique dans la direction axiale tout en réduisant une constante élastique dans la direction de l'écartement et une constante élastique dans la direction perpendiculaire à la direction axiale. Avec les surfaces de séparation des premières pièces en caoutchouc et les surfaces de séparation des deuxièmes pièces en caoutchouc séparées les unes des autres dans la direction de l'axe, et des espaces formés entre les surfaces de séparation, les premières parties de cylindre extérieures et les deuxièmes parties cylindriques extérieures sont maintenues et fixées par des éléments cylindriques. En utilisant les espaces entre les surfaces de séparation des premières pièces en caoutchouc et les surfaces de séparation des deuxièmes pièces en caoutchouc, un composant de compression de la base en caoutchouc dans la direction de l'axe peut être maintenu tout en supprimant une composante de cisaillement de la base en caoutchouc dans la direction d'écartement et la composante de compression de la base en caoutchouc dans la direction perpendiculaire à l'axe.

### Résumé

La présente description a notamment pour but de proposer une articulation antivibratoire à limitation axiale, qui présente un fonctionnement amélioré.

A cet effet, la présente description propose une articulation antivibratoire à butée axiale comportant :
- une armature intérieure qui s'étend longitudinalement selon un premier axe,
- une armature extérieure qui présente une forme annulaire centrée sur un deuxième axe sensiblement parallèle au premier axe, l'armature extérieure entourant l'armature intérieure,
- un corps en élastomère, reliant l'armature intérieure et l'armature extérieure, dans laquelle le corps en élastomère permettant un certain débattement axial de l'armature intérieure par rapport à l'armature extérieure selon le premier axe, un certain débattement radial de l'armature intérieure par rapport à l'armature extérieure perpendiculairement au premier axe et un certain débattement angulaire de l'armature intérieure par rapport à l'armature extérieure, en rotation sensiblement autour d'un point situé sur le premier axe,

dans laquelle le débattement axial est limité dans un premier sens par butée entre une première surface de butée et un premier organe de butée en élastomère solidaires l'un, de l'armature intérieure et l'autre, de l'armature extérieure (soit la première surface de butée est solidaire de l'armature intérieure et le premier organe de butée en élastomère est solidaire de l'armature extérieure, soit la première surface de butée est solidaire de l'armature extérieure et le premier organe de butée en élastomère est solidaire de l'armature intérieure),
et dans laquelle ladite première surface de butée suit une forme générale :
   - soit de portion de cylindre sensiblement centré sur un axe de rotation passant par ledit point et perpendiculaire au premier axe,
   - soit de portion de sphère sensiblement centrée sur ledit point,
dans laquelle le débattement axial est limité en outre dans un deuxième sens opposé au premier sens par butée entre une deuxième surface de butée et un deuxième organe de butée en élastomère solidaires l'un, de l'armature intérieure et l'autre, de l'armature extérieure,
et ladite deuxième surface de butée suit une forme générale :
   - soit de portion de cylindre sensiblement centré sur ledit axe de rotation,
   - soit de portion de sphère sensiblement centrée sur ledit point,
dans laquelle ledit point est situé à l'opposé du corps en élastomère par rapport à la première surface de butée, ladite première surface de butée est convexe de convexité tournée vers le premier organe de butée et la deuxième surface de butée est concave de concavité tournée vers le deuxième organe de butée.

Grâce à ces dispositions, on assure toujours un contact similaire du premier organe de butée contre la première surface de butée, malgré les déplacements angulaires permis entre le premier axe et le deuxième axe. La surface de contact entre le premier organe de butée et la première surface de butée reste ainsi sensiblement constante malgré les déplacements angulaires susmentionnés, et le taux de déformation du premier organe de butée reste uniforme en évitant ainsi de solliciter exagérément une partie seulement du premier organe de butée. On permet ainsi que la courbe effort / déplacement de l'articulation en direction axiale soit sensiblement indépendante des déplacements angulaires susmentionnés, et on augmente la durée de vie de l'articulation.

Dans divers modes de réalisation de l'articulation antivibratoire, on peut éventuellement avoir recours en outre à l'une et/ou à l'autre des dispositions suivantes (seules ou dans toutes leurs combinaisons mutuelles):
- ladite première surface de butée est solidaire de l'armature intérieure et ledit premier organe de butée est solidaire de l'armature extérieure ;
- l'armature extérieure s'étend axialement entre une première extrémité et une deuxième extrémité, l'armature extérieure étant emboîtée dans une bague externe qui comporte un collet interne, la première surface de butée (6a) appartenant à une collerette qui est serrée axialement entre la première extrémité de l'armature extérieure et le collet interne, la deuxième surface de butée appartenant à une collerette qui est maintenue axialement contre la deuxième extrémité de l'armature extérieure par au moins une partie de rétention solidaire de la bague externe.
- ladite partie de rétention est choisie parmi une soudure et une restriction de la bague externe
- ladite première surface de butée est courbée de façon continue ;
- ladite première surface de butée présente des facettes approximant ladite forme générale soit de portion de cylindre, soit de portion de sphère ;
- ladite forme générale est une portion de sphère et ladite première surface de butée présente une forme conique approximant ladite forme générale ;
- ledit premier organe de butée présente une face en regard de ladite première surface de butée, ladite face étant sensiblement parallèle à ladite première surface de butée ;
- ledit premier organe de butée est porté par une première face de support rigide solidaire de l'armature qui porte ledit premier organe de butée, ladite première face de support étant orientée vers ladite première surface de butée et étant sensiblement parallèle à ladite première surface de butée ;
- ladite première surface de butée est formée par une collerette solidaire de l'armature intérieure ;
- ledit premier organe de butée appartient au corps en élastomère ;
- ledit premier organe de butée forme une couronne centrée sur le deuxième axe ;
- ladite première surface de butée est séparée dudit premier organe de butée par un jeu ;
- ladite première surface de butée est reliée audit premier organe de butée ;
- ladite première surface de butée a une étendue radiale supérieure au premier organe de butée, telle que le premier organe de butée soit toujours face à la première surface de butée dans toute l'amplitude de débattement angulaire de l'armature intérieure par rapport à l'armature extérieure ;
- ladite deuxième surface de butée est solidaire de l'armature intérieure et ledit deuxième organe de butée est solidaire de l'armature extérieure ;
- ladite deuxième surface de butée est courbée de façon continue ;
- ladite deuxième surface de butée présente des facettes approximant ladite forme générale soit de portion de cylindre, soit de de portion de sphère ;
- ladite forme générale de la deuxième surface de butée est une portion de sphère et ladite deuxième surface de butée présente une forme conique approximant ladite forme générale ;
- ledit deuxième organe de butée présente une face en regard de ladite deuxième surface de butée, ladite face étant sensiblement parallèle à ladite deuxième surface de butée ;
- ledit deuxième organe de butée est porté par une deuxième face de support rigide solidaire de l'armature qui porte ledit deuxième organe de butée, ladite deuxième face de support étant orientée vers ladite deuxième surface de butée et étant sensiblement parallèle à ladite deuxième surface de butée ;
- ladite deuxième surface de butée est formée par une collerette solidaire de l'armature intérieure ;
- ledit deuxième organe de butée appartient au corps en élastomère ;
- ledit deuxième organe de butée forme une couronne centrée sur le deuxième axe ;
- ladite deuxième surface de butée est séparée dudit deuxième organe de butée par un jeu ;
- ladite deuxième surface de butée est reliée audit deuxième organe de butée ;
- ladite deuxième surface de butée a une étendue radiale supérieure au deuxième organe de butée, telle que le deuxième organe de butée soit toujours face à la deuxième surface de butée dans toute l'amplitude de débattement angulaire de l'armature intérieure par rapport à l'armature extérieure.

### Brève description des dessins

D'autres caractéristiques et avantages de l'articulation antivibratoire à butée axiale apparaîtront au cours de la description suivante de deux de ses formes de réalisation, données à titre d'exemples non limitatif, en regard des dessins joints.

Sur les dessins :
[Fig. 1] La figure 1 est une vue en perspective montrant une articulation antivibratoire selon une première forme de réalisation.
[Fig. 2] La figure 2 est une vue en perspective éclatée montrant l'articulation antivibratoire de la figure 1, vue selon un premier angle de vue.
[Fig. 3] La figure 3 est une vue similaire à la figure 2, vue selon un deuxième angle sensiblement opposé au premier angle de vue.
[Fig. 4] La figure 4 est une vue en coupe axiale de l'articulation antivibratoire des figures 1 à 3.
[Fig. 5] La figure 5 est une vue en coupe axiale similaire à la figure 4, dans une deuxième forme de réalisation.

### Description plus détaillée

Sur les différentes figures, les mêmes références désignent des éléments identiques ou similaires.

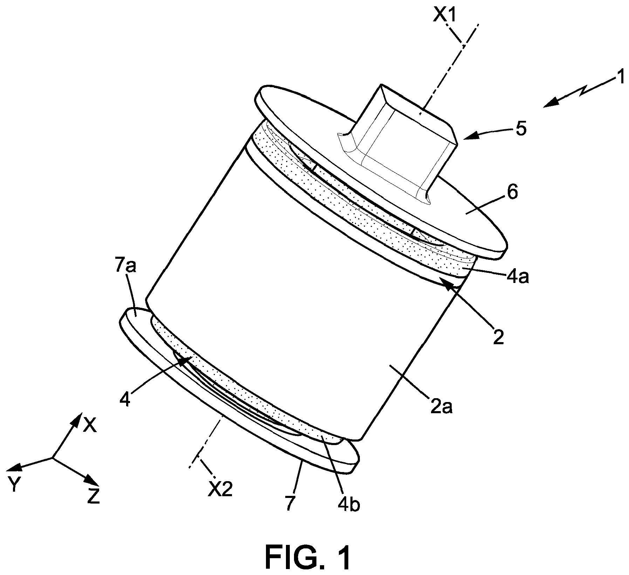

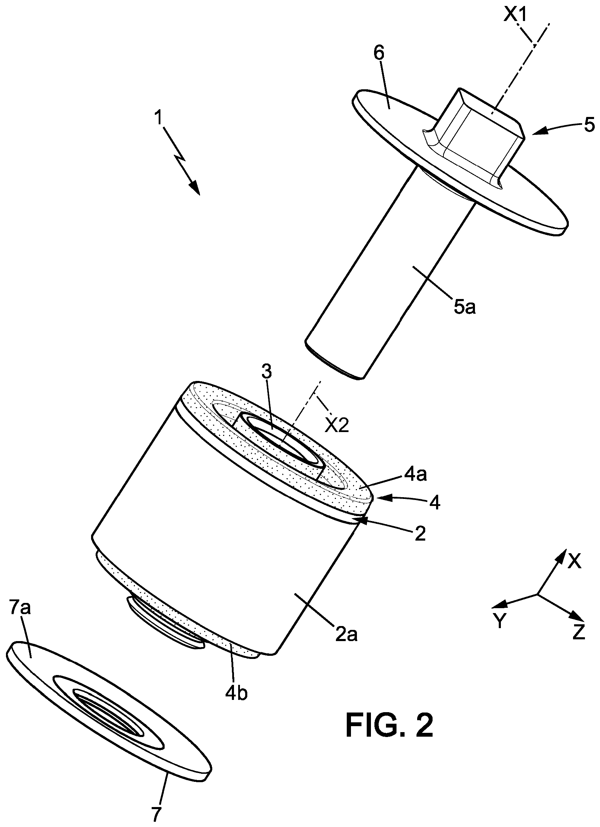

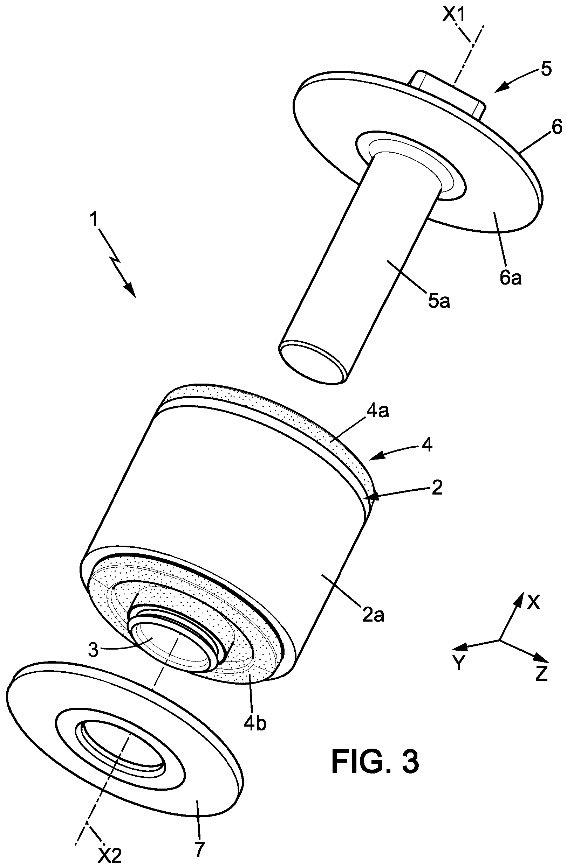

Les figures 1 à 4 montrent une articulation antivibratoire 1 à butée axiale selon une première forme de réalisation, destinée notamment à relier entre elles deux parties d'un véhicule automobile à des fins antivibratoires.

L'articulation antivibratoire 1 peut être notamment utilisée dans la liaison au sol du véhicule automobile, par exemple dans le train de roues avant ou arrière, mais d'autres utilisations sont possibles.

L'articulation antivibratoire 1 comporte :
- une armature intérieure 3 rigide, réalisée par exemple en métal et / ou en matière plastique, qui s'étend longitudinalement selon un premier axe X1,
- une armature extérieure 2 rigide, réalisée par exemple en métal et / ou en matière plastique, qui présente une forme annulaire centrée sur un deuxième axe X2 sensiblement parallèle au premier axe X1, l'armature extérieure 2 entourant l'armature intérieure 3,
- un corps en élastomère 4, reliant l'armature intérieure 3 et l'armature extérieure 2.

Le corps en élastomère 4 peut être surmoulé et adhérisé sur l'armature intérieure 3 et l'armature extérieure 2.

Le premier axe X1 peut être un axe central de l'armature intérieure.

Comme dans l'exemple particulier représenté sur les dessins, l'armature intérieure 3 peut présenter une forme annulaire centrée sur le premier axe X1, notamment une forme de manchon.

L'armature intérieure 3 peut être solidaire par exemple de deux collerettes 6, 7 s'étendant chacune sensiblement radialement vers l'extérieur et encadrant axialement l'armature extérieure 2 et le corps en élastomère 4. Les collerettes 6, 7 présentent des faces internes 6a, 7a en regard l'une de l'autre, qui font face à l'armature extérieure 2 et au corps en élastomère 4 selon le premier axe X1. Les collerettes 6, 7 peuvent notamment être métalliques.

Toujours dans l'exemple particulier représenté sur les dessins, l'armature intérieure 3 peut être solidarisée avec un insert central 5 métallique ou autre, par exemple par emboîtement dudit insert central 5 dans l'armature intérieure 3, cet insert central 5 pouvant éventuellement être formé d'une pièce avec la collerette 6.

L'insert central 5 peut éventuellement être relié au train de roues avant ou arrière du véhicule.

La collerette 7 peut éventuellement être solidarisée à une extrémité de l'armature interne 3, par exemple par sertissage ou autre.

L'armature extérieure 2 peut présenter une forme générale cylindrique centrée sur le deuxième axe X2.

Le deuxième axe X2 peut être parallèle au premier axe X1 (X1 et X2 sont parallèles à une même direction X, et peuvent être confondus ou non), en l'absence de déformation élastique du corps en élastomère 4.

Comme dans l'exemple particulier représenté sur les dessins, l'armature extérieure 2 peut éventuellement être reçue, notamment par emboîtement, dans une bague externe 2a qui peut par exemple être reliée à la caisse du véhicule.

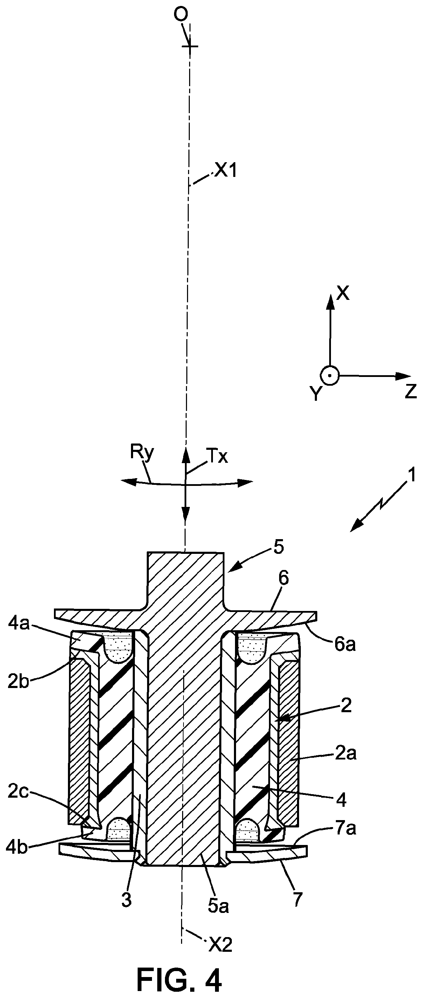

Le corps en élastomère 4 est déformable élastiquement et autorise :
- un certain débattement axial de l'armature intérieure 3 par rapport à l'armature extérieure 2 selon le premier axe X1, selon la double flèche Tx de la figure 4,
- un certain débattement radial de l'armature intérieure 3 par rapport à l'armature extérieure 2 perpendiculairement au premier axe X1 (notamment sensiblement selon deux directions Y et Z perpendiculaires entre elles et perpendiculaires à la direction X susmentionnée),
- un certain débattement angulaire de l'armature intérieure 3 par rapport à l'armature extérieure 4, sensiblement en rotation autour d'un point O situé sur le premier axe X1, au moins selon la double flèche Ry de la figure 4.

Ce débattement angulaire entraîne un décalage angulaire entre le premier axe X1 et le deuxième axe X2, sur une amplitude angulaire qui peut notamment être de quelques degrés dans chaque sens angulaire, par exemple inférieure à 5 degrés.

En plus du débattement angulaire susmentionné, il est possible d'avoir une rotation relative de l'armature intérieure 3 autour du premier axe X1, par rapport à l'armature extérieure 2, sur un débattement angulaire de quelques degrés dans chaque sens angulaire, par exemple inférieur à 15 degrés.

Lorsque l'articulation antivibratoire 1 est montée dans le véhicule, les débattements entre l'armature intérieure 3 et l'armature extérieure 2 sont autorisés ou non et limités par le montage de l'articulation antivibratoire 1 entre les deux parties de véhicules qu'elle relie.

En fonction de ce montage, le débattement angulaire susmentionné en rotation autour du point O peut être selon un ou plusieurs axes de rotation, notamment :
- soit autour d'un seul axe de rotation (par exemple parallèle à la direction Y) qui est perpendiculaire au premier axe X1 et qui passe par le point O,
- soit autour de deux ou trois axes de rotation qui sont perpendiculaires entre eux, au moins l'un d'eux étant perpendiculaire au premier axe X1 (par exemple deux axes de rotation parallèles respectivement aux directions Y et Z au repos, ou deux axes de rotation parallèles respectivement aux directions X et Y (ou X et Z) au repos, ou trois axes de rotation parallèles respectivement aux directions X, Y, Z au repos) et qui passent par le point O, lequel point O est alors un centre de rotation.

Le débattement axial de l'armature intérieure 3 par rapport à l'armature extérieure 2 selon le premier axe X1 est limité au moins dans un premier sens par butée entre une première surface de butée 6a et un premier organe de butée 4a en élastomère, solidaires l'un, de l'armature intérieure 3 et l'autre, de l'armature extérieure 2. Par exemple, la première surface de butée 6a est solidaire de l'armature intérieure 3 et le premier organe de butée 4a est solidaire de l'armature extérieure 2.

Ladite première surface de butée peut être la face interne 6a de la collerette 6susmentionnée.

Ledit premier organe de butée 4a est disposé en regard de la première surface de butée 6a.

Ledit premier organe de butée 4a peut appartenir au corps en élastomère 4.

Ledit premier organe de butée 4a peut former une couronne, continue ou non, centrée sur le deuxième axe X2.

Ledit premier organe de butée 4a peut être surmoulé et adhérisé sur une extrémité axiale de l'armature extérieure 2.

Ladite première surface de butée 6a suit une forme générale :
- soit de portion de cylindre sensiblement centré sur l'axe de rotation (par exemple un axe de rotation parallèle à la direction Y) lorsqu'il n'y a qu'un axe de rotation passant par le point O,
- soit de portion de sphère sensiblement centrée sur le point O (centre de rotation) notamment lorsqu'il y a au moins deux axes de rotation passant par le point O (cette variante est utilisable également lorsque les débattements angulaires se font par rotation autour d'un seul axe de rotation passant par le point O).

On assure ainsi toujours un contact similaire du premier organe de butée 4a contre la première surface de butée 6a, malgré les déplacements angulaires permis entre le premier axe X1 et le deuxième axe X2. La surface de contact entre le premier organe de butée 4a et la première surface de butée 6a reste ainsi sensiblement constante malgré les déplacements angulaires susmentionnés, et le taux de déformation du premier organe de butée 4a reste uniforme en évitant ainsi de solliciter exagérément une partie seulement du premier organe de butée.

Ladite première surface de butée 6a peut être courbée de façon continue.

En variante, ladite première surface de butée 6a présente des facettes planes ou non (par exemple au moins deux facettes dans le cas de la forme cylindrique au moins quatre facettes dans le cas de la forme sphérique) approximant ladite forme générale soit de portion de cylindre, soit de de portion de sphère.

Selon une autre variante, ladite forme générale de la première surface de butée 6a est une portion de sphère et ladite première surface de butée 6aprésente une forme conique approximant ladite forme générale.

Eventuellement, le premier organe de butée 4a présente une face en regard de ladite première surface de butée 6a, ladite face étant sensiblement parallèle à ladite première surface de butée 6a (donc cette face peut présenter une forme générale similaire à la première surface de butée).

Eventuellement, le premier organe de butée 4a peut être porté par une première face de support rigide 2b solidaire de l'armature (par exemple l'armature extérieure 2) qui porte ledit premier organe de butée 4a, ladite première face de support 2b étant orientée vers ladite première surface de butée 6a et étant sensiblement parallèle à ladite première surface de butée 6a (autrement dit, la première face de support 2b présente une forme générale similaire à la première surface de butée 6a). Dans l'exemple représenté sur les dessins, ladite première face de support rigide 2b est formée par une extrémité axiale de l'armature extérieure 2, cette extrémité axiale pouvant éventuellement former une collerette s'étendant radialement vers l'extérieur.

Le point O est situé à l'opposé du corps en élastomère 4 par rapport à la première surface de butée, ladite première surface de butée 6a étant convexe, avec une convexité tournée vers le premier organe de butée 4a.

Ladite première surface de butée 6a peut être séparée dudit premier organe de butée 4a par un jeu, comme dans l'exemple représenté sur les dessins.

En variante, ladite première surface de butée 6a peut être reliée audit premier organe de butée 4a , dont l'élasticité autorise alors les débattements entre les armatures 2, 3.

La première surface de butée 6a a de préférence une étendue radiale supérieure au premier organe de butée 4a, de façon que le premier organe de butée 4a soit toujours face à la première surface de butée 6a dans toute l'amplitude de débattement angulaire de l'armature intérieure 3 par rapport à l'armature extérieure 2.

Le débattement axial de l'armature intérieure 3 par rapport à l'armature extérieure 2 est en outre limité dans un deuxième sens opposé au premier sens, par butée entre une deuxième surface de butée 7a et un deuxième organe de butée 4b en élastomère solidaires l'un, de l'armature intérieure 3 et l'autre, de l'armature extérieure 2.

Dans l'exemple représenté sur les dessins, le débattement axial est ainsi limité dans les deux sens, par butée des faces internes 6a, 7a (formant alors respectivement les première et deuxième surfaces de butée) respectivement contre les organes de butées 4a, 4b (formant respectivement les premier et deuxième organes de butée), lesdits premier et deuxième organes de butées 4a, 4b étant portés respectivement par les faces de support 2b, 2c (respectivement première et deuxième faces de support). Ce qui a été décrit précédemment relativement à la première surface de butée, au premier organe de butée et à la première face de support pour le cas d'une limitation dans un sens, vaut pour la deuxième surface de butée, le deuxième organe de butée et la deuxième face de support, si ce n'est que la deuxième surface de butée 7a est concave.

Dans l'exemple représenté, le point O est situé à l'opposé du corps en élastomère par rapport à la collerette 6, la face interne 6a de la collerette 6 est convexe (de convexité tournée vers l'organe de butée 4a) et la face interne 7a de la collerette 7 est concave (de concavité tournée vers l'organe de butée 4b).

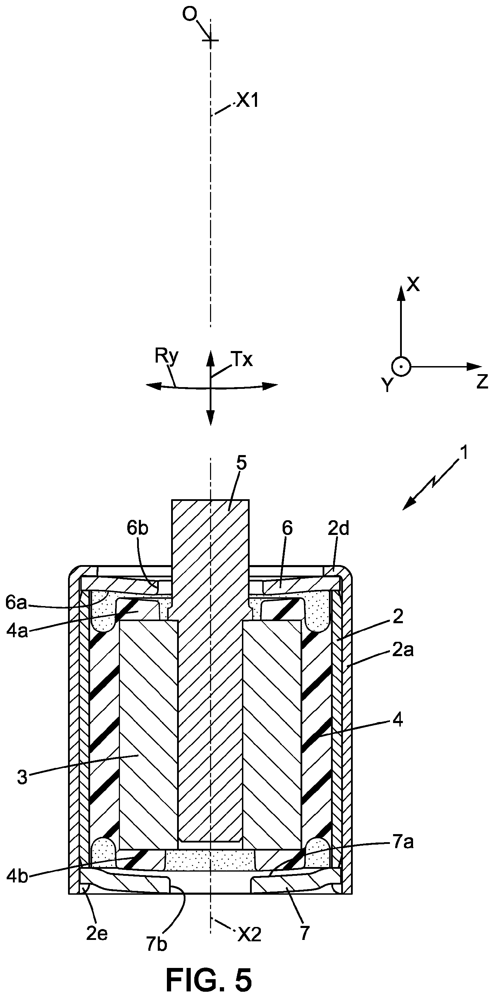

La deuxième forme de réalisation de l'invention, représentée sur la figure 5, est similaire à la première forme de réalisation et ne sera pas décrite à nouveau en détail ; seules les différences par rapport à la première forme de réalisation seront décrites ci-après.

Cette deuxième forme de réalisation se distingue de la première forme de réalisation par le fait que ladite première surface de butée 6a et ladite deuxième surface de butée 7a sont solidaires de l'armature extérieure 2, ledit premier organe de butée 4a et ledit deuxième organe de butée 4b étant solidaires de l'armature intérieure 3.

L'armature intérieure 3 peut présenter par exemple des faces d'extrémité axiales, et les première et deuxième organes de butée 4a, 4b peuvent éventuellement être surmoulés et adhérisés sur lesdites faces d'extrémité.

L'armature extérieure 2 s'étend axialement entre une première extrémité et une deuxième extrémité et la bague externe 2a dans laquelle est emboîtée l'armature extérieure 2, peut présenter à une extrémité un collet interne 2d.

La collerette 6, à laquelle appartient la première surface de butée 6a, est serrée axialement entre la première extrémité de l'armature extérieure 2 et le collet interne 2d.

La collerette 7, à laquelle appartient la deuxième surface de butée 7a, est maintenue axialement contre la deuxième extrémité de l'armature extérieure 2 par au moins une partie de rétention 2e interne solidaire de la bague externe 2a.

Ladite partie de rétention 2e peut être par exemple une soudure (continue ou par points) réalisée à l'intérieur de la bague 2a, ou une restriction de la bague externe 2a tel que par exemple un rétreint ou des poinçonnages

## Revendications

1. Articulation antivibratoire (1) à butée axiale comportant :
- une armature intérieure (3) qui s'étend longitudinalement selon un premier axe (X1),
- une armature extérieure (2) qui présente une forme annulaire centrée sur un deuxième axe (X2) sensiblement parallèle au premier axe (X1), l'armature extérieure (2) entourant l'armature intérieure (3),
- un corps en élastomère (4), reliant l'armature intérieure (3) et l'armature extérieure (2),
dans laquelle le corps en élastomère (4) permet un certain débattement axial de l'armature intérieure (3) par rapport à l'armature extérieure (2) selon le premier axe (X1), un certain débattement radial de l'armature intérieure (3) par rapport à l'armature extérieure (2) perpendiculairement au premier axe (X1) et un certain débattement angulaire de l'armature intérieure (3) par rapport à l'armature extérieure (2), en rotation sensiblement autour d'un point (O) situé sur le premier axe (X1),
dans laquelle le débattement axial est limité dans un premier sens par butée entre une première surface de butée (6a) et un premier organe de butée (4a) en élastomère solidaires l'un, de l'armature intérieure (3) et l'autre, de l'armature extérieure (2),
dans laquelle ladite première surface de butée (6a) suit une forme générale :
- soit de portion de cylindre sensiblement centré sur un axe de rotation passant par ledit point (O) et perpendiculaire au premier axe (X1),
- soit de portion de sphère sensiblement centrée sur ledit point (O), ledit point (O) étant situé à l'opposé du corps en élastomère (4) par rapport à la première surface de butée (6a), et ladite première surface de butée (6a) étant convexe de convexité tournée vers le premier organe de butée (4a) et
l'articulation antivibratoire est **caractérisé en ce que** le débattement axial est limité en outre dans un deuxième sens opposé au premier sens par butée entre une deuxième surface de butée (7a) et un deuxième organe de butée (4b) en élastomère solidaires l'un, de l'armature intérieure (3) et l'autre, de l'armature extérieure (2),
et ladite deuxième surface de butée (7a) suit une forme générale :
- soit de portion de cylindre sensiblement centré sur ledit axe de rotation,
- soit de portion de sphère sensiblement centrée sur ledit point (O), deuxième surface de butée (7a) étant concave de concavité tournée vers le deuxième organe de butée (4b).

2. Articulation antivibratoire (1) à butée axiale selon la revendication 1, dans laquelle ladite première surface de butée (6a) et ladite deuxième surface de butée (7a) sont solidaires de l'armature intérieure (3), ledit premier organe de butée (4a) et ledit deuxième organe de butée (4b) étant solidaires de l'armature extérieure (2).

3. Articulation antivibratoire (1) à butée axiale selon la revendication 1, dans laquelle ladite première surface de butée (6a) et ladite deuxième surface de butée (7a) sont solidaires de l'armature extérieure (2), ledit premier organe de butée (4a) et ledit deuxième organe de butée (4b) étant solidaires de l'armature intérieure (3).

4. Articulation antivibratoire (1) à butée axiale selon la revendication 3, dans laquelle l'armature extérieure (2) s'étend axialement entre une première extrémité et une deuxième extrémité, l'armature extérieure (2) étant emboîtée dans une bague externe (2a) qui comporte un collet interne (2d), la première surface de butée (6a) appartenant à une collerette (6) qui est serrée axialement entre la première extrémité de l'armature extérieure (2) et le collet interne (2d), la deuxième surface de butée (7a) appartenant à une collerette (7) qui est maintenue axialement contre la deuxième extrémité de l'armature extérieure (2) par au moins une partie de rétention (2e) solidaire de la bague externe (2a).

5. Articulation antivibratoire (1) à butée axiale selon la revendication 4, dans laquelle ladite partie de rétention (2e) est choisie parmi une soudure et une restriction de la bague externe (2a).

6. Articulation antivibratoire (1) à butée axiale selon l'une quelconque des revendications précédentes, dans laquelle ladite première surface de butée (6a) et la deuxième surface de butée (7a) sont chacune courbées de façon continue.

7. Articulation antivibratoire (1) à butée axiale selon l'une quelconque des revendications 1 à 5, dans laquelle ladite première surface de butée (6a) et la deuxième surface de butée (7a) présentent chacune des facettes approximant ladite forme générale soit de portion de cylindre, soit de portion de sphère.

8. Articulation antivibratoire (1) à butée axiale selon l'une quelconque des revendications 1 à 5, dans laquelle ladite forme générale est une portion de sphère et ladite première surface de butée (6a) et ladite deuxième surface de butée (7a) présentent chacune une forme conique approximant ladite forme générale.

9. Articulation antivibratoire (1) à butée axiale selon l'une quelconque des revendications précédentes, dans laquelle ledit premier organe de butée (4a) présente une face en regard de ladite première surface de butée (6a), ladite face étant sensiblement parallèle à ladite première surface de butée (6a) et ledit deuxième organe de butée (4b) présente une face en regard de ladite deuxième surface de butée (7a), ladite face étant sensiblement parallèle à ladite deuxième surface de butée (7a).

10. Articulation antivibratoire (1) à butée axiale selon l'une quelconque des revendications précédentes, dans laquelle ledit premier organe de butée (4a) est porté par une première face de support (2b) rigide solidaire de l'armature (3, 2) qui porte ledit premier organe de butée (4a), ladite première face de support (2b) étant orientée vers ladite première surface de butée (6a) et étant sensiblement parallèle à ladite première surface de butée (6a),
et ledit deuxième organe de butée (4b) est porté par une deuxième face de support (2c) rigide solidaire de l'armature (3, 2) qui porte ledit deuxième organe de butée (4b), ladite deuxième face de support (2c) étant orientée vers ladite deuxième surface de butée (7a) et étant sensiblement parallèle à ladite deuxième surface de butée (7a).

11. Articulation antivibratoire (1) à butée axiale selon l'une quelconque des revendications précédentes, dans laquelle ledit premier organe de butée (4a) et le deuxième organe de butée (4b) forment chacun une couronne centrée sur le deuxième axe (X2).

12. Articulation antivibratoire (1) à butée axiale selon l'une quelconque des revendications précédentes, dans laquelle ladite première surface de butée (6a) a une étendue radiale supérieure au premier organe de butée (4a), telle que le premier organe de butée (4a) soit toujours face à la première surface de butée (6a) dans toute l'amplitude de débattement angulaire de l'armature intérieure (3) par rapport à l'armature extérieure (2),
et dans laquelle ladite deuxième surface de butée (7a) a une étendue radiale supérieure au deuxième organe de butée (4b), telle que le deuxième organe de butée (4b) soit toujours face à la deuxième surface de butée (7a) dans toute l'amplitude de débattement angulaire de l'armature intérieure (3) par rapport à l'armature extérieure (2).

## Patentansprüche

1. Antivibrationsgelenk (1) mit axialem Anschlag, umfassend:
- ein inneres Gestell (3), welches sich longitudinal entlang einer ersten Achse (X1) erstreckt,
- ein äußeres Gestell (2), welches eine Ringform aufweist, welche auf eine zweite Achse (X2) zentriert ist, welche im Wesentlichen parallel zu der ersten Achse (X1) ist, wobei das äußere Gestell (2) das innere Gestell (3) umgibt,
- einen Elastomerkörper (4), welcher das innere Gestell (3) und das äußere Gestell (2) verbindet,
wobei der Elastomerkörper (4) eine bestimmte axiale Auslenkung des inneren Gestells (3) bezüglich des äußeren Gestells (2) entlang der ersten Achse (X1), eine bestimmte radiale Auslenkung des inneren Gestells (3) bezüglich des äußeren Gestells (2) senkrecht zu der ersten Achse (X1) und eine bestimmte Winkelauslenkung des inneren Gestells (3) bezüglich des äußeren Gestells (2) in Rotation im Wesentlichen um einen Punkt (O) erlaubt, welcher auf der ersten Achse (X1) positioniert ist,
wobei die axiale Auslenkung in einer ersten Richtung durch Anschlag zwischen einer ersten Anschlagsfläche (6a) und einem ersten Elastomer-Anschlagselement (4a) begrenzt ist, welche das eine mit dem inneren Gestell (3) und das andere mit dem äußeren Gestell (2) verbunden sind, wobei die erste Anschlagsfläche (6a) einer allgemeinen Form folgt:
- entweder eines Zylinderabschnitts, welcher im Wesentlichen auf eine Rotationsachse zentriert ist, welche durch den Punkt (O) verläuft und senkrecht zu der ersten Achse (X1) ist,
- oder eines Kugelabschnitts, welcher im Wesentlichen auf den Punkt (O) zentriert ist,
wobei der Punkt (O) gegenüber dem Elastomerkörper (4) bezüglich der ersten Anschlagsfläche (6a) positioniert ist und die erste Anschlagsfläche (6a) konvex mit einer Konvexität ist, welche in Richtung des ersten Anschlagselements (4a) gewandt ist, und das Antivibrationsgelenk **dadurch gekennzeichnet ist, dass** die axiale Auslenkung ferner in einer zweiten Richtung entgegengesetzt zu der ersten Richtung durch einen Anschlag zwischen einer zweiten Anschlagsfläche (7a) und einem zweiten Elastomer-Anschlagselement (4b) begrenzt ist, welche das eine mit dem inneren Gestell (3) und das andere mit dem äußeren Gestell (2) verbunden sind, und die zweite Anschlagsfläche (7a) einer allgemeinen Form folgt:
- entweder eines Zylinderabschnitts, welcher im Wesentlichen auf die Rotationsachse zentriert ist,
- oder eines Kugelabschnitts, welcher im Wesentlichen auf den Punkt (O) zentriert ist,
wobei die zweite Anschlagsfläche (7a) konkav mit einer Konkavität ist, welche in Richtung des zweiten Anschlagselements (4b) gewandt ist.

2. Antivibrationsgelenk (1) mit axialem Anschlag nach Anspruch 1, wobei die erste Anschlagsfläche (6a) und die zweite Anschlagsfläche (7a) mit dem inneren Gestell (3) verbunden sind, wobei das erste Anschlagselement (4a) und das zweite Anschlagselement (4b) mit dem äußeren Gestell (2) verbunden sind.

3. Antivibrationsgelenk (1) mit axialem Anschlag nach Anspruch 1, wobei die erste Anschlagsfläche (6a) und die zweite Anschlagsfläche (7a) mit dem äußeren Gestell (2) verbunden sind, wobei das erste Anschlagselement (4a) und das zweite Anschlagselement (4b) mit dem inneren Gestell (3) verbunden sind.

4. Antivibrationsgelenk (1) mit axialem Anschlag nach Anspruch 3, wobei sich das äußere Gestell (2) axial zwischen einem ersten Ende und einem zweiten Ende erstreckt, wobei das äußere Gestell (2) in einem äußeren Ring (2a) eingefasst ist, welcher einen inneren Kragen (2d) umfasst, wobei die erste Anschlagsfläche (6a) einem Flansch (6) zugehörig ist, welcher axial zwischen dem ersten Ende des äußeren Gestells (2) und dem inneren Kragen (2d) geklemmt ist, wobei die zweite Anschlagsfläche (7a) einem Flansch (7) zugehörig ist, welcher axial gegen das zweite Ende des äußeren Gestells (2) durch wenigstens einen Halteteil (2e) gehalten ist, welcher mit dem äußeren Ring (2a) verbunden ist.

5. Antivibrationsgelenk (1) mit axialem Anschlag nach Anspruch 4, wobei der Halteteil (2e) unter einer Schweißnaht und einer Begrenzung des äußeren Rings (2a) ausgewählt ist.

6. Antivibrationsgelenk (1) mit axialem Anschlag nach einem der vorhergehenden Ansprüche, wobei die erste Anschlagsfläche (6a) und die zweite Anschlagsfläche (7a) jeweils in kontinuierlicher Weise gebogen sind.

7. Antivibrationsgelenk (1) mit axialem Anschlag nach einem der Ansprüche 1 bis 5, wobei die erste Anschlagsfläche (6a) und die zweite Anschlagsfläche (7a) jeweils Facetten aufweisen, welche die allgemeine Form entweder eines Zylinderabschnitts oder eines Kugelabschnitts annähern.

8. Antivibrationsgelenk (1) mit axialem Anschlag nach einem der Ansprüche 1 bis 5, wobei die allgemeine Form ein Kugelabschnitt ist und die erste Anschlagsfläche (6a) und die zweite Anschlagsfläche (7a) jeweils eine konische Form aufweisen, welche die allgemeine Form annähert.

9. Antivibrationsgelenk (1) mit axialem Anschlag nach einem der vorhergehenden Ansprüche, wobei das erste Anschlagselement (4a) eine Seite gegenüber der ersten Anschlagsfläche (6a) aufweist, wobei die Seite im Wesentlichen parallel zu der ersten Anschlagsfläche (6a) ist, und das zweite Anschlagselement (4b) eine Seite gegenüber der zweiten Anschlagsfläche (7a) aufweist, wobei die Seite im Wesentlichen parallel zu der zweiten Anschlagsfläche (7a) ist.

10. Antivibrationsgelenk (1) mit axialem Anschlag nach einem der vorhergehenden Ansprüche, wobei das erste Anschlagselement (4a) durch eine erste steife Trageseite (2b) getragen ist, welche mit dem Gestell (3, 2) verbunden ist, welches das erste Anschlagselement (4a) trägt, wobei die erste Trageseite (2b) in Richtung der ersten Anschlagsfläche (6a) orientiert ist und im Wesentlichen parallel zu der ersten Anschlagsfläche (6a) ist, und wobei das zweite Anschlagselement (4b) durch eine zweite steife Trageseite (2c) getragen ist, welche mit dem Gestell (3, 2) verbunden ist, welches das zweite Anschlagselement (4b) trägt, wobei die zweite Trageseite (2c) in Richtung der zweiten Anschlagsfläche (7a) orientiert ist und im Wesentlichen parallel zu der zweiten Anschlagsfläche (7a) ist.

11. Antivibrationsgelenk (1) mit axialem Anschlag nach einem der vorhergehenden Ansprüche, wobei das erste Anschlagselement (4a) und das zweite Anschlagselement (4b) jeweils einen Ring bilden, welcher auf der zweiten Achse (X2) zentriert ist.

12. Antivibrationsgelenk (1) mit axialem Anschlag nach einem der
vorhergehenden Ansprüche, wobei die erste Anschlagsfläche (6a) eine radiale Ausdehnung aufweist, welche größer als das erste Anschlagselement (4a) ist, so dass das erste Anschlagselement (4a) stets zu der ersten Anschlagsfläche (6a) in der gesamten Winkel-Auslenkungsamplitude des inneren Gestells (3) bezüglich des äußeren Gestells (2) weist,
und wobei die zweite Anschlagsfläche (7a) eine radiale Ausdehnung aufweist, welche größer als das zweite Anschlagselement (4b) ist, so dass das zweite Anschlagselement (4b) stets zu der zweiten Anschlagsfläche (7a) während der gesamten Winkel-Auslenkungsamplitude des inneren Gestells (3) bezüglich des äußeren Gestells (2) weist.

## Claims

1. Anti-vibration joint (1) with axial abutment comprising:
- an inner reinforcement (3) which extends longitudinally along a first axis (X1),
- an outer reinforcement (2) which has an annular shape centred on a second axis (X2) substantially parallel to the first axis (X1), the outer reinforcement (2) surrounding the inner reinforcement (3),
- an elastomer body (4), connecting the inner reinforcement (3) and the outer reinforcement (2),
wherein the elastomer body (4) allows a specific axial displacement of the inner reinforcement (3) relative to the outer reinforcement (2) along the first axis (X1), a specific radial displacement of the inner reinforcement (3) relative to the outer reinforcement (2) perpendicularly to the first axis (X1) and a specific angular displacement of the inner reinforcement (3) relative to the outer reinforcement (2), in terms of rotation substantially about a point (O) located on the first axis (X1),
wherein the axial displacement is limited in a first direction by abutment between a first abutment surface (6a) and a first abutment member (4a) made of elastomer, one being secured to the inner reinforcement (3) and the other one to the outer reinforcement (2),
wherein said first abutment surface (6a) follows a general shape:
- either a cylindrical portion substantially centred on an axis of rotation passing through said point (O) and perpendicular to the first axis (X1),
- or a spherical portion substantially centred on said point (O),
said point (O) being located opposite the elastomer body (4) with respect to the first abutment surface (6a), and said first abutment surface (6a) being convex with convexity directed towards the first abutment member (4a) and
the anti-vibration joint is **characterised in that** the axial displacement is further limited in a second direction opposite to the first direction by abutment between a second abutment surface (7a) and a second abutment member (4b) made of elastomer, one being secured to the inner reinforcement (3) and the other one to the outer reinforcement (2),
and said second abutment surface (7a) follows a general shape:
- either a cylindrical portion substantially centred on said axis of rotation,
- or a spherical portion substantially centred on said point (O),
the second abutment surface (7a) being concave with concavity directed towards the second abutment member (4b).

2. Anti-vibration joint (1) with axial abutment according to claim 1, wherein said first abutment surface (6a) and said second abutment surface (7a) are secured to the inner reinforcement (3), said first abutment member (4a) and said second abutment member (4b) being secured to the outer reinforcement (2).

3. Anti-vibration joint (1) with axial abutment according to claim 1, wherein said first abutment surface (6a) and said second abutment surface (7a) are secured to the outer reinforcement (2), said first abutment member (4a) and said second abutment member (4b) being secured to the inner reinforcement (3).

4. Anti-vibration joint (1) with axial abutment according to claim 3, wherein the outer reinforcement (2) extends axially between a first end and a second end, the outer reinforcement (2) being engaged in an outer ring (2a) which comprises an inner flange (2d), the first abutment surface (6a) belonging to a collar (6) which is axially clamped between the first end of the outer reinforcement (2) and the inner flange (2d), the second abutment surface (7a) belonging to a collar (7) which is held axially against the second end of the outer reinforcement (2) by at least one retention portion (2e) secured to the outer ring (2a).

5. Anti-vibration joint (1) with axial abutment according to claim 4, wherein said retention portion (2e) is selected from a weld seam and a restriction of the outer ring (2a).

6. Anti-vibration joint (1) with axial abutment according to any one of the preceding claims, wherein the first abutment surface (6a) and the second abutment surface (7a) are each continuously curved.

7. Anti-vibration joint (1) with axial abutment according to any one of claims 1 to 5, wherein each of said first abutment surface (6a) and the second abutment surface (7a) has facets approximating said general shape either with a cylindrical portion or with a spherical portion.

8. Anti-vibration joint (1) with axial abutment according to any one of claims 1 to 5, wherein said general shape is a spherical portion and said first abutment surface (6a) and said second abutment surface (7a) each have a conical shape approximating said general shape.

9. Anti-vibration joint (1) with axial abutment according to any one of the preceding claims, wherein said first abutment member (4a) has a face facing said first abutment surface (6a), said face being substantially parallel to said first abutment surface (6a) and said second abutment member (4b) has a face facing said second abutment surface (7a), said face being substantially parallel to said second abutment surface (7a).

10. Anti-vibration joint (1) with axial abutment according to any one of the preceding claims, wherein said first abutment member (4a) is carried by a first rigid support face (2b) secured to the reinforcement (3, 2) which carries said first abutment member (4a), said first support face (2b) being orientated towards said first abutment surface (6a) and being substantially parallel to said first abutment surface (6a),
and said second abutment member (4b) is carried by a second rigid support face (2c) secured to the reinforcement (3, 2) which carries said second abutment member (4b), said second support face (2c) being orientated towards said second abutment surface (7a) and being substantially parallel to said second abutment surface (7a).

11. Anti-vibration joint (1) with axial abutment according to any one of the preceding claims, wherein the first abutment member (4a) and the second abutment member (4b) each form a ring centred on the second axis (X2).

12. Anti-vibration joint (1) with axial abutment according to any one of the preceding claims, wherein said first abutment surface (6a) has a radial extent greater than the first abutment member (4a), such that the first abutment member (4a) is always facing the first abutment surface (6a) over the entire angular displacement range of the inner reinforcement (3) with respect to the outer reinforcement (2),
and wherein said second abutment surface (7a) has a radial extent greater than the second abutment member (4b), such that the second abutment member (4b) is always facing the second abutment surface (7a) over the entire angular displacement range of the inner reinforcement (3) with respect to the outer reinforcement (2).
